Europäisches Patentamt

European Patent Office

Office européen des brevets

(11) Veröffentlichungsnummer: **0 211 100 B1**

(12) **EUROPÄISCHE PATENTSCHRIFT**

(19)

(45) Veröffentlichungstag der Patentschrift:
07.03.90

(21) Anmeldenummer: 85109927.5

(22) Anmeldetag: 07.08.85

(51) Int. Cl.⁴: **F16B 13/06**

(54) Schwerlastanker mit Sicherungseinrichtung.

(43) Veröffentlichungstag der Anmeldung:
25.02.87 Patentblatt 87/9

(45) Bekanntmachung des Hinweises auf die Patenterteilung:
07.03.90 Patentblatt 90/10

(84) Benannte Vertragsstaaten:
AT BE CH DE FR GB IT LI LU NL SE

(56) Entgegenhaltungen:
DE-A- 2 354 185
DE-B- 1 500 765
DE-U- 7 507 019
DE-U- 8 008 921
FR-A- 2 131 223
GB-A- 805 797
GB-A- 840 741
GB-A- 2 072 782

(73) Patentinhaber: Mächtle GmbH, Jahnstrasse 4,
D-7015 Korntal-Münchingen(DE)

(72) Erfinder: Mächtle, Daniel, Hörnleweg 8,
D-7000 Stuttgart 31(DE)

(74) Vertreter: Raeck, Wilfrid, Dipl.-Ing., Moserstrasse 8,
D-7000 Stuttgart 1(DE)

## Beschreibung

Die Erfindung betrifft einen Schwerlastanker zur Verankerung in einem Bohrloch mit einer aus nachgiebig zusammengehaltenen Metallsegmenten bestehenden Spreizhülse,
mit einem die Spreizhülse durchsetzenden Schraubbolzen, auf dessen dem Bohrlochgrund benachbarten Ende ein in die Spreizhülse hineinragender Konuskörper sitzt, ferner mit einem die Spreizhülse beim Setzen des Ankers in der Bohrung positionierenden Halteelement
und mit einer zwischen Spreizhülse und Halteelement angeordneten, vom Schraubbolzen durchsetzten Sicherungseinrichtung, die mit über den Umfang der Spreizhülse hinausragenden federnden Vorsprüngen als Verankungerungsmittel mit der Bohrlochwandung in Reibungseingriff steht.

Bei einem aus der GB-A-840 741 bekannten Spreizdübel der vorbezeichneten Art sind die Spreizhülse bildende schalenförmige Spreizsegmente an ihrem rückwärtigen Ende durch einen auf den Schraubbolzen aufgeschobenen Halteteil aus Blech mit angeformten, in Axialrichtung umgebogenen Zungen zusammengehalten. Am Schraubbolzen ist ein eine seitliche Verdickung bildender radialer Vorsprung angeformt, an dem der Halteteil mit der Spreizhülse beim Hineinschieben des Spreizdübels in die Wandbohrung anliegt, um bis in die richtige Tiefe der Wandbohrung gebracht zu werden. Der vorangehende Spreizkonus ist fester Bestandteil des Schraubbolzens, so daß der angeformte Vorsprung beim Setzen des Dübels zusammen mit dem Schraubbolzen in Auszugsrichtung bewegt wird, bevor sich die Spreizhülse aufweitet. Da folglich die Spreizsegmente auch nicht zu Beginn des Spreizvorgangs durch den Vorspung am Schraubbolzen festgehalten werden, sind an dem blechernen Halteteil Lamellenfedern angeformt, die sich ungefähr in Axialrichtung zum Bohrlocheingang hin erstrecken. Diese Lamellenfedern sind beim anfänglichen Aufweiten der Spreizsegmente aktiv, indem sie sich in die Bohrungswandung eingraben und die Spreizsegmente an einer Bewegung zur Bohrlochmündung hin hindern. Sobald der Konus gefaßt hat und sich die Spreizsegmente in die Bohrungswandung einzugraben beginnen, kommt dem bekannten Halteteil und seinen Lamellenfedern keine weitere Bedeutung mehr zu.

Die Funktion des Halteteils wird bei anderen bekannten Schwerlastankern im allgemeinen von einem Distanzelement übernommen, wenn die Verankerung in einer tieferen Wandbohrung vorgenommen wird, um die tragende Wand im Bereich der Bohrungsmündung nicht zu überlasten bzw. um die durch das Aufweiten der Spreizhülse erzeugten Druckbeanspruchungen vom Bohrlocheingang fernzuhalten. Das Distanzelement sorgt somit dafür, daß die Spreizhülse in der für die Aufweitung vorbestimmten Tiefe der Wandbohrung verbleibt.

Da ein funktionsgerechter Aufweitvorgang der Spreizhülse durch das dort hineingezogene Konuselement von verschiedenen nicht ausreichend beherrschbaren Einflußgrößen abhängig ist, beispielsweise von der Rauhigkeit der Bohrlochwand, vom Konuswinkel, vom Reibungsfaktor zwischen einer Konusmutter und der Vorderkante der Spreizsegmente oder auch von anderen Einflußgrößen, hat man versucht, wenigstens einzelne dieser Einflüsse auszuschalten. So ist es üblich, die Konusmutter an ihrer zur Spreizhülse weisenden Oberfläche zu schmieren oder Wandbohrungen mit engen Toleranzen und geringem Übermaß bezüglich des zu setzenden Spreizdübels vorzusehen, so daß schon bei leichtem Anzug des Schraubbolzens die Spreizung mit der dadurch beginnenden Fixierung durch Reibschluß gewährleistet ist. Wandbohrungen mit solch engen Toleranzen sind aber insofern aufwendig, als bei einer Serienmontage der sich schnell abnutzende Gesteinsbohrer häufig ausgewechselt werden muß. Wenn bei Wiederverwendung des gleichen Gesteinsbohrers der Durchmesser der Wandbohrung abnimmt, treten Schwierigkeiten beim Setzen des Schwerlastankers ein, der dann stecken bleibt, bevor er die vorgesehene Bohrungstiefe erreicht.

Andererseits entstehen im praktischen Betrieb bei der Dübelmontage oder später unter gewissen Bedingungen in der Wandbohrung Risse, insbesondere Kreuzrisse. In diesen Fällen oder auch, wenn die Wandbohrung aus anderen Gründen sich im Eingangsbereich aufweitet, kann der Schwerlastanker mit der an ihm hängenden Last seinen Halt in der Wandbohrung verlieren, sobald die auf Zug belastete Spreizhülse sich gelockert hat und in der aufgeweiteten Wandbohrung keinen Widerstand mehr findet.

Aus der DE-A-23 54 185 ist eine Verankerungsbuchse zum Festhalten eines Schraubbolzens in einer Wandbohrung bekannt, die bei Benutzung zusammen mit einem mit Kunstharz gefüllten, zerstörbaren Behälter in die Wandbohrung eingeführt wird, wobei das aushärtbare Harz beim Setzen der Verankerungsbuchse aus dem dann zerstörten Behälter in den Ringraum zwischen Wandbohrung und Außenwand der Verankerungsbuchse einfließt und durch Aushärten die Verankerungsbuchse in der Wandbohrung festlegt. Danach folgt das Einschrauben des festzulegenden Schraubbolzens in das Innengewinde der Verankerungsbuchse. In dem in Setzrichtung gesehen hinteren Bereich der Verankerungsbuchse ist in eine Ringnut eine Spannscheibe eingesetzt, die über den Umfang verteilte Vorspünge aufweist. Diese sich mit ihren Vorspüngen in die Wandbohrung eingrabende Spannscheibe dient einerseits zur vorläufigen Fixierung der Buchse aufgrund des widerhakenartigen Eingriffes in die Bohrlochwandung und dichtet andererseits die Wandbohrung soweit ab, daß das nach Zerstörung des Behälters austretende Harz nicht unbehindert aus der Wandbohrung herausfließt. Das aushärtende Harz sorgt für eine sichere Verankerung der Buchse, was durch Ringnuten in den Außenflächen der Buchse sowie durch die Widerhakenwirkung der Spannscheibe unterstützt wird.

Der Erfindung liegt die Aufgabe zugrunde, das Haltevermögen eines Schwerlastankers der eingangs bezeichneten Art dahingehend zu verbessern, daß im Fall einer durch unbeabsichtigte äußere Einwirkungen, z. B. durch Risse, erfolgenden Aufweitung der Wandbohrung der Schwerlastanker mit der weiterbestehenden Auszugsbelastung gegen Axialbewegungen wirksam gesichert bleibt.

Ausgehend von einem Schwerlastanker mit den aus dem eingangs angegebenen Stand der Technik bekannten Merkmalen wird die vorgenannte Aufgabe gemäß der Erfindung dadurch gelöst, daß die Spreizhülse durch mindestens eine ringförmige Feder zusammengehalten ist,
daß der Konuskörper eine auf den Schraubbolzen geschraubte Konusmutter ist,
daß das Halteelement aus einer sich zwischen der Sicherungseinrichtung und dem, gesehen in Setzrichtung, hinteren Endbereich des Schraubbolzens erstreckenden, den Schraubbolzen umgebenden Distanzhülse besteht
und daß die Sicherungseinrichtung als Scheibe ausgebildet ist, bei der die federnden Vorsprünge etwa radial verlaufen.

Nach dem Grundgedanken der Erfindung gewährleistet die Sicherungseinrichtung mit den sich ungefähr radial erstreckenden Vorsprüngen, daß im Fall einer infolge von Rissen aufplatzenden Wandbohrung die Zuglast den Anker nicht aus dem Bohrloch zieht, sondern der unter der Zuglast stehende Konus tiefer als zuvor in die von der Sicherungseinrichtung mindestens vorübergehend festgehaltene Spreizhülse eindringen kann. Die durch den von der Distanzhülse weitergeleiteten Druck beim Setzen des Dübels im allgemeinen konkav zur Bohrungsmündung verformte Sicherungsscheibe wird beim Einführen des Ankers in die Wandbohrung möglicherweise noch stärker konkav verformt, um nach dem Setzen und Spreizen des Ankers endgültig in diesem Zustand zu verbleiben. Erst wenn sich der unter Zugbeanspruchung stehende Anker in der aufgrund eines Mauerrisses sich erweiternden Wandbohrung zu bewegen beginnt, wirkt die konkave Verformung als eine begrenzte Haltekraftreserve der Zugkraft entgegen. Diese Kraftreserve reicht aus, um die an der Sicherungsscheibe anliegenden Segmente der Spreizhülse vorübergehend bzw. so lange an einer Auszugsbewegung zu hindern, bis der Konus seine erneute Spreizfunktion übernommen und sich die Spreizhülse in die Wandung der nunmehr erweiterten Bohrung eingegraben hat.

Mit der erfindungsgemäßen Sicherung wird der weitere Vorteil erreicht, daß von vornherein nicht eine Wandbohrung mit engen Toleranzen vorgesehen zu werden braucht. Bohrlöcher mit größerem Durchmesser führen zu Montagefreundlichkeit und auch Kostenvorteilen, weil sich Gesteinsbohrer erfahrungsgemäß abnutzen, so daß die Bohrlöcher von einem zunächst zulässigen maximalen Durchmesser im Laufe der Zeit enger werden und man solche Gesteinsbohrer wesentlich länger benutzen kann.

Ausgestaltungen der erfindungsgemäßen Sicherung bei einem Schwerlastanker bilden den Gegenstand der abhängigen Ansprüche 2 bis 4.

Ausführungsbeispiele der Erfindung sind nachfolgend anhand der Beschreibung näher erläutert.
Es zeigen

Fig. 1 einen Schwerlastanker gemäß der Erfindung in montiertem Zustand in teilweise geschnittener Darstellung entsprechend einem axialen Längsschnitt durch die Wandbohrung,
Fig. 2 eine Ansicht eines Sicherungsrings.

In einer z.B. aus Beton bestehenden Verankerungswand 14 ist mit einem üblichen Bohrwerkzeug eine zylindrische Bohrung 10 eingebracht worden, die sich bis zum Bohrlochgrund 12 erstreckt. Die Tiefe bzw. Länge der Bohrung 10 ist so bemessen, daß die Spreizzone eines darin aufzunehmenden Schwerlastankers ausreichend weit von der Bohrlochmündung entfernt ist, damit die Wand den Spreizdruck aufnehmen kann und der Bohrlochmündung nahe Bereiche von übermäßigen Beanspruchungen freigehalten werden.

Der Schwerlastanker wird gebildet aus einem Schraubbolzen 16, an dem ein Schraubenkopf 18 angeformt und auf dessen freies Ende ein Spreizkonus oder eine Konusmutter 20 aufgeschraubt ist. Die Konusmutter 20 besitzt einen sich in Richtung der Bohrlochmündung verjüngenden Umfang und ragt mit ihrem verjüngten Ende in eine Spreizhülse 22 hinein. Diese Spreizhülse besteht in üblicher Weise aus mehreren gleichgroßen Schalen oder Segmenten 22a, 22b usw., die entsprechend der Zeichnung an dem der Bohrlochmündung näheren Ende der Spreizhülse durch eine ringförmig gebogene Flachfeder 24 zusammengehalten sind. Die Flachfeder 24 ist zweckmäßigerweise in einer sich rund um die Spreizhülse erstreckenden flachen Umfangsnut 26 aufgenommen, so daß die Segmente 22 bis zu einem gewissen Grade an axialen Relativbewegungen zueinander gehindert sind.

Der Durchmesser der Bohrung 10 in der Wand 14 ist etwas größer als der Durchmesser der Spreizhülse 20, wobei dieses zusätzliche Maß vom Nenndurchmesser des Schwerlastankers in der Weise abhängig ist, daß bei größeren Nenndurchmessern beispielsweise ein Zusatzmaß von 1 - 2 mm für den Bohrungsdurchmesser in Frage kommt. Etwa den gleichen Außendurchmesser wie die nicht aufgeweitete Spreizhülse 20 besitzt ein Distanzelement 28, die vorzugsweise in Form einer Metallhülse sich zwischen dem rückwärtigen Ende der Spreizhülse und der Mündung des Bohrloches 10 erstreckt. Die Distanzhülse 28 kann sich auch durch eine Öffnung 30 in dem zu befestigenden Werkstück 32 bis hin zu einer Unterlegscheibe 34 erstrecken, die zwischen Werkstück 32 und Schraubenkopf 18 angeordnet ist. Anstelle der dargestellten Schraube 16 mit angeformtem Schraubenkopf 18 kann auch ein Gewindebolzen vorgesehen sein, auf den die Konusmutter 20 aufgeschraubt wird und auf dessen äußeres Ende nach der Unterlegscheibe 34 eine Mutter aufgeschraubt wird. In jedem Fall wird durch Drehen bzw. Anziehen des Schraubenkopfes 18 die Konusmutter 20 in das vorangehende Ende der Spreizhülse 22 hineingezogen, so daß sich diese innerhalb der Bohrung 10 aufweitet und in die Bohrlochwandung eindringt.

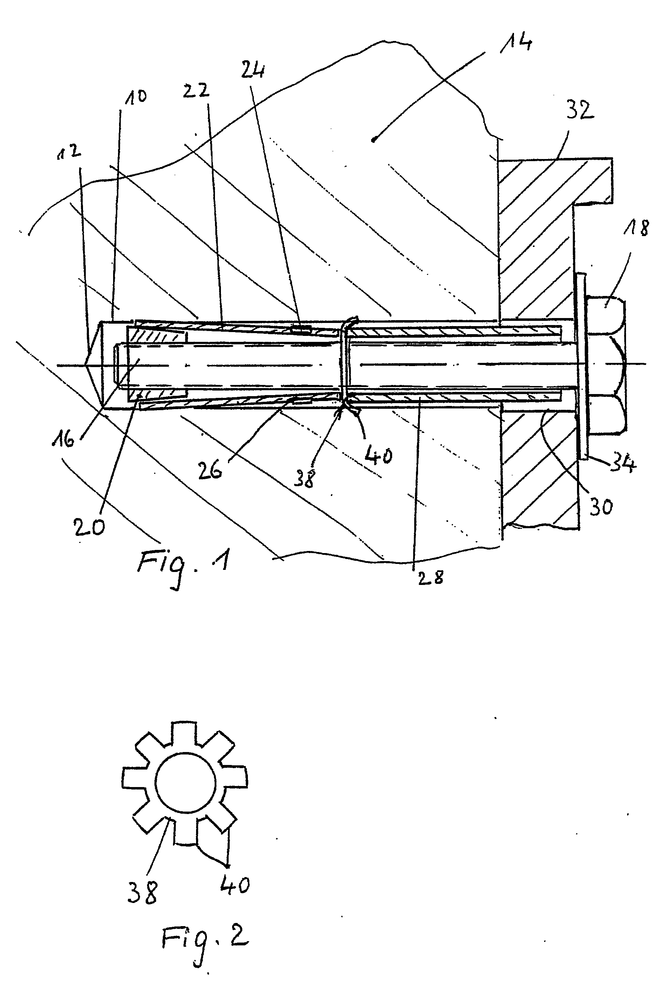

Entsprechend Fig. 1 befindet sich zwischen Spreizhülse 20 und der Distanzhülse 28 ein vom Schraubbolzen 16 durchsetzter Sperrring 38, der gemäß Fig. 2 normalerweise radial vorstehende Vorsprünge 40 aufweist. Wenn beim Setzen des Schwerlastankers dieser durch die Öffnung 30 des zu befestigenden Werkstückes 32 hindurchgesteckt und mit einem Schlagwerkzeug in die Bohrung 10 bis auf eine vorbestimmte Länge eingetrieben wird, biegen sich die Vorsprünge 40 des Sperringes 38 zurück, wie dies in Fig. 1 angedeutet ist. Die Feder- oder Rückstellkraft im Sperring 38 reicht aus, daß die Vorsprünge 40 an der Bohrlochwand bleibend anliegen und sich im Fall einer geringfügigen Axialbewegung der Spreizhülse nach rechts in Fig. 1 sofort widerhakenähnlich noch stärker in die Bohrlochwandung eingraben.

Eine derartige Bewegung des gesamten Ankers nach rechts bezüglich Fig. 1 kann beispielsweise eintreten, falls sich die Bohrung 10 in der Wand 14 aus beliebigen Gründen unzulässig aufgeweitet oder falls sich in der Wand 14 Kreuzrisse gebildet haben sollten, durch die der zunächst erzielte Halt der Spreizhülse 22 in der Wandbohrung verloren geht. Das Sicherungselement in Form des Sperrrings 38 sorgt in diesen Fällen dafür, daß bei weiterem Anziehen des Schraubenkopfes 18, gegebenenfalls mit einem Drehmomentenschlüssel, die Konusmutter 20 weiter in die Spreizhülse 22 hineinbewegt und somit der Schwerlastanker von neuem bzw. stärker gespreizt werden kann. Der Sperring 38 sorgt ferner von vornherein dafür, daß sich die einzelnen Segmente 22a, 22b usw. der Spreizhülse nicht axial gegeneinander verschieben, sondern gleichmäßig auf die Konusfläche der Konushülse 20 hinaufgleiten.

## Patentansprüche

1. Schwerlastanker zur Verankerung in einem Bohrloch mit einer aus nachgiebig zusammengehaltenen Metallsegmenten bestehenden Spreizhülse (22), mit einem die Spreizhülse durchsetzenden Schraubbolzen, auf dessen dem Bohrlochgrund (12) benachbarten Ende ein in die Spreizhülse hineinragender Konuskörper sitzt, ferner mit einem die Spreizhülse beim Setzen des Ankers in der Bohrung positionierenden Halteelement und mit einer zwischen Spreizhülse (22) und Halteelement angeordneten, vom Schraubbolzen (16) durchsetzten Sicherungseinrichtung, die mit über den Umfang der Spreizhülse hinausragenden federnden Vorsprüngen (40) als Verankerungsmitteln mit der Bohrlochwandung in Reibungseingriff steht,
dadurch gekennzeichnet,
daß die Spreizhülse durch mindestens eine ringförmige Feder zusammengehalten ist,
daß der Konuskörper eine auf den Schraubbolzen (16) geschraubte Konusmutter (20) ist,
daß das Halteelement aus einer sich zwischen der Sicherungseinrichtung und dem, gesehen in Setzrichtung, hinteren Endbereich des Schraubbolzens erstreckenden, den Schraubbolzen (16) umgebenden Distanzhülse (28) besteht und daß die Sicherungseinrichtung (38) als Scheibe ausgebildet ist, bei der die federnden Vorsprünge (40) etwa radial verlaufen.

2. Schwerlastanker nach Anspruch 1, dadurch gekennzeichnet, daß die Sicherungseinrichtung (38) aufgrund des Setzvorgangs konvex in Richtung zum Bohrlochgrund verformt bzw. vorgespannt ist.

3. Schwerlastanker nach Anspruch 1 oder 2, dadurch gekennzeichnet, daß von der Sicherungseinrichtung aus über den Umfang verteilt angeordnete, auswärts gerichtete Segmente vorstehen.

4. Schwerlastanker nach einem der vorhergehenden Ansprüche, dadurch gekennzeichnet, daß der Sicherungseinrichtung aus einem genormten Federring oder Sperring besteht.

## Claims

1. Heavy duty anchor intended for being secured in a borehole, comprising an expanding sleeve (22) consisting of resiliently hold-together metal segments,
a screw bolt passing through the expanding sleeve and on its ends near the bottom (12) of the borehole forming seat for a cone body projecting into the expanding sleeve, a retaining element for positioning the expanding sleeve within the borehole during setting of the anchor,
and a security means disposed between the expanding sleeve (22) and the retaining element, penetrated by the screw bolt (16), and including elastic projections (40) protruding over the circumference of the expanding sleeve, which as anchoring means frictionally engage the borehole wall,
characterized in that
the expanding sleeve (22) is held together by means of at least one annular spring,
the cone body is a cone nut (20) threaded onto the screw bolt (16),
the retaining element consists of a spacer sleeve (28) surrounding the screw bolt (16) and extending between the security means and the rear end of the screw bolt,
and in that the security means (28) is in the form of a disk with said resilient projections (40), extending about radially.

2. Anchor according to claim 1, characterized in that the security means (38) is convexly deformed towards the bottom of the borehole or is biased in that direction by means of the setting operation.

3. Anchor according to claim 1 or 2, characterized in that the security means has outwardly directed segments, which are specedly disposed about its circumference.

4. Anchor according to one of the preceding claims, characterized in that the security means consists of a standard spring washer or locking washer.

## Revendications

1. Cheville pour poids lourds susceptible à être ancrée dans un alésage, comprenant une douille expansible (22) se composant de segments flexiblement assemblés, d'une tige filetée traversant la douille d'expansion et - sur son extrémité voisine du côté du fond (12) de l'alésage - formant un support à un corps de cône entrant dans la douille d'expansion,

un élément de retention destiné à positionner la douille pendant la pose de la cheville dans l'alésage, un élément de sécurité traversé par la tige filetée (16) et disposé entre la douille (22) et l'élément de retention, étant muni des parties en saillie élastiques qui passent la circonférence de la douille et qui comme moyens d'ancrage sont en prise de frottement avec la paroi de l'alésage,

caractérisée en ce que la douille d'expansion (22) est assemblée au moins par un ressort annulaire,

que le corps de cône est un écrou de cône (20) vissé sur la tige filetée (16),

en ce que l'élément de retention consiste d'une douille entretoise (28) entourant la tige filetée (16) et s'étendant entre le moyen de sécurité et la partie arrière de la tige filetée, et que le moyen de sécurité (38) est formé comme un disque avec des parties en saillie élastiques (40) s'étendant dans le sens radial.

2. Cheville selon la revendication 1, caractérisée en ce que le moyen de sécurité (38) par le procédé de pose de la cheville est précontreinté ou déformé en forme convexe dans la direction du côté du fond de l'alésage.

3. Cheville selon la revendication 1 ou 2, caractérisée en ce que le moyen de sécurité comporte des segments en saillie dirigés vers l'extérieur et divisés sur son circonférence.

4. Cheville selon l'une des revendications précédentes, caractérisée en ce que le moyen de sécurité est constitué d'une rondelle élastique ou d'un anneau d'arrêt standardisé.

EP 0 211 100 B1

Fig. 1

Fig. 2